# EUROPEAN PATENT APPLICATION

(11) **EP 4 621 510 A1**
(43) Date of publication of application: **24.09.2025**
(21) Application number: 24165173.6
(22) Date of filing: 21.03.2024
(51) Int. Cl.: G05B 19/418, G05B 13/02

(54) **COMPUTER-IMPLEMENTED DEVICE, COMPUTER-IMPLEMENTED METHOD, AND COMPUTER PROGRAM PRODUCT FOR CONTROLLING A CLOSED-LOOP TRANSPORTATION SYSTEM**

(71) Applicant: Siemens Aktiengesellschaft, 80333 München (DE)
(72) Inventor: The designation of the inventor has not yet been filed
(74) Representative: Siemens Patent Attorneys

(57) **Abstract**

The invention relates to a computer-implemented device for controlling a closed-loop transportation system, the closed-loop transportation system comprising a linear transport system, including a first end and a second end as well as a belt system arranged to form a closed-loop between the first end and the second end of the linear transport system, wherein the computer-implemented device comprises a receiving unit for receiving a number N of status signals with N ≥ 1, the number N of status signals including a certain indication for a current operation status of the closed-loop transportation system, a calculating unit using at least one neural network, said at least one neural network being configured to provide at least one output signal for controlling the belt system using the number N of status signals as input and a controlling unit for controlling the belt system using the provided at least one output signal.

## Description

The present invention relates to a computer-implemented device for controlling a closed-loop transportation system, the closed-loop transportation system comprising a linear transport system and a belt system. Moreover, the present invention relates to a system comprising a closed-loop transportation system, to a computer-implemented method and to a computer program product for controlling a closed-loop transportation system.

Linear and planar motor transportation systems are widely known and appreciated as configurable transportation concept for contemporary production facilities. A modern linear transport system is based on the arrangement of one or more individually and subsequently arranged segments wherein each segment forms a respective magnetic linear motor. Said linear motor is typically made from a stator part, implemented as a linear rail that contains electric windings configured to exhibit a magnetic field when energized and a rotor part, which may be implemented as a magnetic plate (referred to herein as a carrier) arranged on the stator part. When the linear motor is energized, a moving magnetic field is generated along the longitudinal extension of the stationary part of the linear motor that acts as a propulsion for driving the carrier.

These linear motor arrangements are commonly used in production chains that require a product to go through different fabrication processes (so-called processing stations) such as drilling, cutting, assembling, etc. The main advantages of these systems lie in their high positioning accuracy of the carriers, the active positioning of the carriers, and the possibility to interact with the processing stations. Moreover, the carriers may be moved to certain positions in a production line and may be configured to reside at a respective position for a configurable time period to allow the execution of a corresponding processing step.

In some application scenarios, it may be required to transport a certain good on a carrier along subsequently arranged processing stations of a processing chain by means of the linear transport system and to return a carrier, for subsequent use, from a final processing station back to the first processing station of the processing chain and thus to the beginning of the linear transport system. For the return of the carriers, a conveyor belt or a tooth belt may be used in combination with an linear transport system to provide a closed-loop transportation system. Such a combination of a linear transport system and a belt system is required in order to avoid congestion situations in the production chain and to prevent traffic jams therein, e.g., if multiple carriers accumulate at the end of the production chain and are not moved onwards (e.g., returned to the beginning of the production chain) any further.

When it is required to return the carriers, which arrived at the very end of a linear transport system to the beginning of the linear transport system again a handover from the linear transport system to the conveyor belt may be initiated which may require a mechanical attachment of the carrier onto the belt (e.g., a toothed belt). This situation during the circulation of a carrier in a closed-loop transportation system is crucial as mechanical damage to the belt and/or the carriers (e.g., due to colliding carriers or carriers that are only erroneously attached to a toothed belt) needs to be avoided during the handover procedure.

To this end, gapping and/or synchronization mechanisms are required which, conventionally, e.g., rely on one or more of predefined rules. For instance, it may be required to place the carriers on the toothed belt at a distance from each other that prevents them from colliding during transportation. This minimum distance may, e.g., be calculated for each specific application according to the geometry of the carriers and/or the motion path of the conveyor belt/toothed belt.

In some cases, a modulo needs to be activated to drive the position of the toothed belt using a recurring reference frame. In some examples, a carrier may only be attached to the belt at certain predefined positions, e.g., expressed as predefined separations of respective feasible positions on the belt. This predefined separation may be referred to as a modulo and may be recurring over the belt which is configured as a closed-loop. This parameter may be set to the length of the carrier plus a safety distance. As a consequence, the toothed belt's position may reset once such a displacement is reached.

Additionally or alternatively, it may be required to drive the toothed belt at a constant speed which guarantees a safe attachment and detachment of the carriers to respective teeth on the toothed belt.

In some cases, it may be required that a carrier can only be moved from the linear transport system to the toothed belt when the carrier and the toothed belt are synchronized, e.g., moving at a same (constant) speed.

Furthermore, it may be required that the movement of carriers between the linear transport system and the toothed belt are based on a specific synchronization process that matches the electromagnetic forces created on the carrier by a respective energized segment of the linear transport system and the mechanical forces at the toothed belt. In practical situations, small differences may arise depending on whether the carrier is moved from or onto the linear transport system. More specifically, when the carrier is to be moved from the linear transport system to the toothed belt, the carrier and the toothed belt may be required to both be at respective sync points (as it will further be described below) and both need to be moved at a same speed. However, when the carrier needs to be moved from the toothed belt to the linear transport system, a respective sync point on the belt needs to be reached, given that the carrier is anchored to it.

However, the aforementioned ruleset may be sensitive to mechanical tolerances and may require empirical adjustment during on-site commissioning which may lead to increased implementation and maintenance efforts. Moreover, said ruleset may disadvantageously reduce throughput and may increase the probability for the occurrence of blocking states and bottlenecks in the closed-loop transportation system.

Instead of a carrier on the linear transport system waiting for a sync point of the belt system passing by, it may be desirable to allow that a carrier may be attached to the belt system such that undesired waiting times are reduced. However, implementing such a more dynamic handover of a carrier to the belt system may require a derivation of a new calculation method for the determination of the speed of the belt system which cannot be facilitated in a satisfying manner by means of currently known control procedures for a closed-loop transportation system.

Even more, operating the belt system with a constant speed, may disadvantageously neglect the aspect that the carriers on the linear transport system may undergo different production steps with different processing times/speeds such that carriers may subsequently be available at the end of the linear transport system in time intervals of varying duration wherein it is nevertheless desired that carriers are flowing through the system in a manner that no waiting times for carriers occur, e.g., at the end of the linear transport system prior of being handed over to the belt system. Currently, a constant belt speed is determined by trial-and-error which is time consuming and may still not lead to an optimized carrier throughput at the closed-loop transportation system.

Therefore, it is an object to provide an improved control of a closed-loop transportation system that at least partially overcomes these known drawbacks and which may provide an optimized throughput of carriers in such a closed-loop transportation system.

According to a first aspect, a computer-implemented device for controlling a closed-loop transportation system is provided which comprises a linear transport system including a first end and a second end and a belt system arranged to form a closed-loop between the first end and the second end of the linear transport system. The computer-implemented device comprises a receiving unit for receiving a number N of status signals with N ≥ 1, the number N of status signals including a certain indication for a current operation status of the closed-loop transportation system, a calculating unit using at least one neural network, said at least one neural network being configured to provide at least one output signal for controlling the belt system using the number N of status signals as input and a controlling unit for controlling the belt system using the provided at least one output signal.

By means of the aforementioned computer-implemented device an operation of the belt system tailored to circumstantial needs may be provided. That is, a dynamic adaptation of the operation of the belt system may be provided to ideally maintain an optimal throughput of the closed-loop transportation system, even if the processing times of products transported by means of the closed-loop transportation time vary.

Due to the at least one neural network, an efficient determination of the at least one output signal may be facilitated which may render a time-consuming trial-and-error approach, known in the art, obsolete in order to find optimized operation parameters for the belt system. Moreover, using the at least one neural network may allow a flexible adaptation of the operation of the belt system without the necessity for strictly following implemented static rules (e.g., the ruleset discussed above). Therefore, the ruleset may at least be relaxed.

As a result, a more operator-friendly and thus more cost-efficient handling of the closed-loop operation system may be provided.

The at least one neural network used by the calculating unit may embody an algorithm for an AI (artificial intelligence) policy of the computer-implemented device that can be set up to also include various machine states or signals from previous/following closed-loop transportation systems. This may enable the neural network and therefore the calculating unit to have more control in cases of fast changing conditions where the process speed is changing quickly.

Here and in the following, a neural network or artificial neural network can be understood as software code that is stored on a computer-readable storage medium and represents one or more networked artificial neurons or can simulate their function. The software code can also contain several software code components, which can, for example, have different functions. In particular, an artificial neural network can implement a non-linear model or a non-linear algorithm that maps an input, here the status signals, to an output, here the output signals. The input may be given by an input feature vector or an input sequence and the output can contain, for example, an output category for a classification task, one or more determined values, e. g. setpoints for motor controllers or a predicted sequence.

According to an embodiment, the linear transport system may further comprise a number of carriers movable between the first end and the second end of the linear transport system and wherein the belt system may be further configured to receive at least one carrier from the linear transport system at the second end and to return the at least one carrier to the linear transport system at the first end.

In some examples, the linear transport system may be provided with a single carrier. In other examples, the linear transport system may be provided with more than one carrier such as, e.g., two carriers, three carriers, four carriers, five carriers, six carriers, seven carriers, eight carriers, nine carriers or ten carriers. In some examples, the linear transport system may be provided with more than ten carriers.

Enabling a dynamic adjustment of the belt system by means of the at least one operation parameter, waiting times, arising from the conventional requirement that a carrier can only be attached to the belt system at predefined sync points, that are spaced apart on the belt system, may be minimized. Therefore, an increased carrier throughput within the closed-loop transportation system may advantageously be supported.

According to an embodiment, the receiving unit may be configured to receive the number N of status signals which may include a position of the number of carriers in the linear transport system, an occupancy of an initial segment of the linear transport system, an occupancy of a final segment of the linear transport system, an activation information of the initial segment of the linear transport system, an activation information of the final segment of the linear transport system, an operation mode of the belt system and/or an operation speed of the belt system during a previous cycle.

In some examples, the linear transport system may comprise one or more segments, wherein each segment may represent a linear motor or a part of a linear motor (i.e., the subsequent arrangement of segments may make up the linear motor). In such a case, the position of a carrier in the linear transport system may, e.g., generally be expressed as the segment in which the carrier is currently located. In addition or alternatively, the position may also be referenced relative to the start of a segment of the linear transport system (e.g., in metric units). Alternatively, the position may also be referenced relative to the end of a segment of the linear transport system.

An initial segment of the linear transport system may be understood as the first segment of the linear transport system, i.e., a segment at which a carrier may be handed over from, e.g., the belt system to the linear transport system. In analogy, a final segment of the linear transport system may be understood as the last segment of a linear transport system, e.g., a segment at which a carrier may be handed over from the linear transport system to the belt system.

The occupancy of the initial or the final segment, respectively, may be indicated by a single boolean value wherein a value of 0 may indicate that a certain segment is not occupied by a carrier and wherein a value of 1 may indicate that a certain segment is occupied by a carrier or vice versa.

An activation of the initial segment or the last segment may be understood as an indication whether a respective segment is energized and thus able to move a carrier onward in the linear transport system. The activation information may be represented by a boolean value wherein a value of 0 may indicate that the respective segment is not activated whereas a value of 1 may indicate that the respective segment is activated or vice versa.

An operation mode of the toothed belt may be understood as one of an initialization stage (e.g., a state during which a current position of all carriers (as well as the total number of carriers) of the closed-loop transportation system is determined), normal operation (e.g., a state during which the belt system may be operated in accordance with the determined at least one operation parameter) and or a handover state (a state in which a carrier may be handed over from the linear transport system to the belt system).

A cycle may be understood as a full turnaround of a carrier in the closed-loop transportation system.

According to a further embodiment, the at least one output signal provided by the neural network may include a parameter indicative of an operation speed of the belt system.

Therefore, a dynamic and tailored configuration of the belt system, and in particular of the operation speed of the belt of the belt system may be facilitated.

According to a further embodiment, the controlling unit may be configured to disregard the provided at least one output signal when one or more predefined conditions are met.

The one or more predefined conditions are met when a carrier is received by the belt system at the second end and/or when a carrier is returned from the belt system to the linear transport system at the first end and/or during an initialization stage of the closed-loop transportation system.

Additionally or alternatively, the controlling unit may be configured to control the belt system to operate at a constant speed when a carrier is received by the belt system at the second end and/or when a carrier is returned from the belt system to the linear transport system at the first end and/or during an initialization stage of the closed-loop transportation system.

As a result, the operation of the belt system may additionally be set to predetermined and thus deterministic operation states under some circumstances which will further be described below.

In a further embodiment, the controlling unit may be configured to select the constant speed such that the constant speed of the belt system may match the constant speed of the at least one carrier that is to be received by the belt system. Therefore, the risk for damaging the carrier and/or the belt system and/or the linear transport system may be reduced.

In another embodiment, the neural network may be configured to use reinforcement learning and to receive as additional inputs rewards for maximizing a throughput of the at least one carrier in the closed-loop transportation system, rewards for minimizing an energy consumption of the belt system, rewards for avoiding a blocking state of the at least one carrier if more than one carrier is present and/or rewards for allowing a simultaneous receiving of a carrier at the second end by the belt system and a returning of another carrier at the first end and rewards for avoiding a collision of carriers if more than one carrier is present.

Minimizing an energy consumption may be associated with rewarding an operation of the belt system at a constant speed. Rewarding an avoidance of blocking states may improve the overall robustness of the closed-loop transportation system. Allowing for simultaneous receiving and returning of carriers may improve the flexibility of the closed-loop transportation system, in particular, for longer control times of the closed-loop transportation system by the calculating unit. Rewarding a collision avoidance of carriers may improve the safety of the closed-loop transportation system.

In a further embodiment, the at least one neural network may be trained using a Proximal Policy Optimization, PPO, algorithm.

In a further embodiment, the PPO algorithm may be run on a simulation of the closed-loop transportation system.

This may avoid any blockage of a real world closed-loop transportation system during training and may advantageously prevent a real world closed-loop transportation system from being damaged as a result of a potentially harmful at least one output signal determined during the training of the at least one (still not completely trained) neural network.

In a further embodiment, the at least one neural network may at least partially be trained based on inputs associated with a real-world closed-loop transportation system.

This may enable a fine tuning of the at least one neural network to a real world closed-loop transportation system as it will further be described below.

In another embodiment, the training of the at least one neural network based on the real-world closed-loop transportation system may be configured to remove deviations between the simulation of the closed-loop transportation system and the real-world closed-loop transportation system and/or to account for degradation effects in the closed-loop transportation system.

In an embodiment, the inputs associated with the real-world closed-loop transportation system may be obtained from a cloud service and/or wherein the at least one trained neural network may be obtained from a cloud service.

This may advantageously support a distributed and faster processing of the training of the neural network. Moreover, it may thus not be required that the computer-implemented device is provided with respective means for handling large data as it may occur during the training process of the neural network thus positively affecting the manufacturing costs of the computer-implemented device.

Any embodiment of the first aspect may be combined with any embodiment of the first aspect to obtain another embodiment of the first aspect.

According to a second aspect, a closed-loop transportation system is proposed that comprises a linear transport system with a first end and a second end and a belt system arranged to form a closed-loop between the first end and the second end of the linear transport system. The system may further comprise a computer-implemented device for controlling the belt system as outlined above.

According to a third aspect, a computer-implemented method for controlling a closed-loop transportation system is suggested, the closed-loop transportation system may comprise a linear transport system with a first end and a second end and a belt system arranged to form a closed-loop between the first end and the second end of the linear transport system. The computer-implemented method may comprise receiving a number N of status signals with N ≥ 1, including an indication of a current operation status of the closed-loop transportation system and calculating, using at least one neural network, at least one output signal for controlling the belt system using the received at least one signal as input. Moreover, the method may relate to a controlling unit for controlling the belt system using the provided at least one output signal.

In some embodiments, the linear transport system may be provided as a multi-carrier system.

According to another aspect, a computer program product comprising a program code for executing the computer-implemented method is suggested.

The respective entity, e.g. the calculating unit, may be implemented in hardware and/or in software. If said entity is implemented in hardware, it may be embodied as a device, e.g. as a computer or as a processor or as a part of a system, e.g. a computer system. If said entity is implemented in software it may be embodied as a computer program product, as a function, as a routine, as a program code or as an executable object.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

The embodiments and features described with reference to the apparatus of the present invention apply mutatis mutandis to the method of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Figs. 1A and 1B depict illustrations of exemplary closed-loop transportation systems;
Fig. 2 depicts an illustration of an exemplary closed-loop transportation system;
Fig. 3 shows a schematic block diagram of an embodiment of a system of a computer-implemented device;
Fig. 4 shows an exemplary neural network;
Fig. 5 shows a schematic block diagram of a training of a neural network; and
Fig. 6 shows a schematic flow chart of an embodiment of a computer-implemented method.

In the Figures, reference numerals designate like or functionally equivalent elements, unless otherwise indicated.

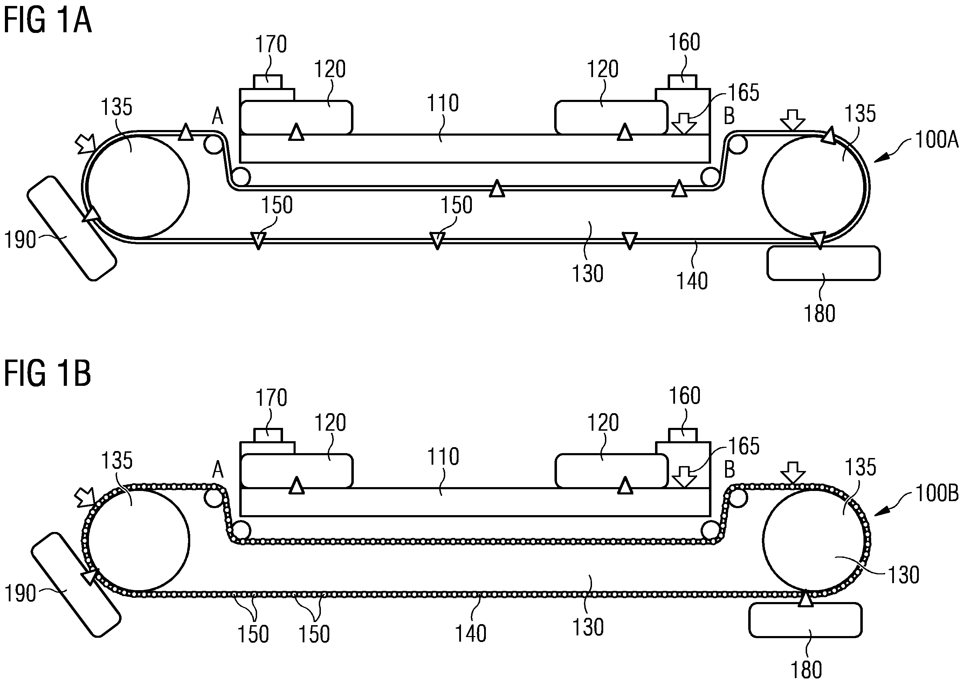

Figs. 1A and 1B depict exemplary closed-loop transportation systems 100A, 100B. Fig. 1A depicts a closed-loop transportation system 100A as known in the art whereas Fig. 1B depicts a closed-loop transportation system 100B according to an aspect of the present invention.

Fig. 1A shows a closed-loop transportation system 100A. The closed-loop transportation system 100A comprises a linear transport system 110 with a first end A end a second end B. A number of carriers 120 may be deployed in the linear transport system 110 and may be movable between the first end A and the second end B.

The closed-loop transportation system 100A comprises a belt system 130. The belt system 130 may be connected to the linear transport system 110 such that the closed-loop transportation system 100A may be formed, i.e., such that the closed-loop transportation system 100A may facilitate the circulation of carriers 120 within the closed-loop transportation system 100A.

The belt system 130 may comprise at least two rollers 135 which may act as actuation means for a belt 140 that may be wound about each of the rollers 135 and which may be in operational connection with the rollers 135. Belt 140 may conventionally be operated at a constant speed. In other words, rollers 135 may be adapted to move the belt 140 in a clockwise direction (or a counter-clockwise direction).

The belt 140 may comprise at least one sync point 150. The at least one sync point 150 may be associated with a location on the belt 140 at which a carrier 120 (currently residing on the linear transport system 110) may be handed over to the belt system 130. Carriers 180 and 190 represent exemplary carriers that are attached to the belt 140 at respective sync points 150.

In some examples, linear transport system 110 may further comprise a check-out station 160 that may be associated with a sync trigger 165. The check-out station 160 may be configured to accommodate a carrier 120 that has arrived at a final segment of the linear transport system 110 and is to be handed over to the belt system 130. By means of the sync trigger 165, the linear transport system 110 may monitor whether a carrier 120 at the check-out station 160 may be handed over to the belt system 130 by evaluating whether a sync point 150 is located in close vicinity of the check-out station 160, e.g., whether a sync point 150 on the belt 140 is located underneath the check-out station 160. Such a scenario may be referred to as a zero-positioning of the belt 140 as a reference may be derivable (such as, e.g., an origin of a recurring coordinate system on the belt 140) with respect to the location of the belt 140 a carrier 120 may have been attached to. If this is the case, carrier 120 which has arrived at check-out station 160 may be attached to belt 150 at the respective location associated with the sync point 150 (e.g., carriers 180 and 190). If no sync point 150 is located in close vicinity of the check-out station 160, the carrier 120 at the check-out station 160 may reside at the check-out station 160 until a sync point 150 is determined in close vicinity of the check-out station 160 despite the fact that the belt 140 may still have enough empty space to accommodate an additional carrier 120 between two subsequent sync points 150. This may cause an undesired waiting time and may disadvantageously affect the throughput of the closed-loop transportation system 100A.

This configuration may further lead to an undesired blocking of the closed-loop transportation system 100A in a case in which the linear transport system 110 may be occupied with carriers 120, waiting for a sync point 150 to hand over a carrier 120 to the belt 140 whereas a carrier 190, already attached to the belt 140 cannot be handed over from the belt 140 to the linear transport system 110 (at check-in station 170) as the linear transport system 110 is still fully occupied with carriers 120. This bottleneck situation may lead to a disadvantageous blocking of the closed-loop transportation system 100A and may disadvantageously affect the overall throughput of the closed-loop transportation system 100A.

Fig, 1B shows a closed-loop transportation system 100B according to aspects of the present invention.

Components 110, 120, 130, 135, 140, 160, 170, 180, 190, A and B of the closed-loop transportation system 100B according to Fig. 1B correspond to the respective components of the closed-loop transportation system 100A described with reference to Fig. 1A, above.

In contrast to belt 140 of the closed-loop transportation system 100A (Fig. 1A) which comprises only sparsely spaced sync points 150, the belt 140 of the closed-loop transportation system 100B (Fig. 1B) is provided with narrowly spaced sync points 155. In a preferred embodiment, belt 140 may be provided as a toothed belt and each tooth of the toothed belt may act as a respective sync point 155. This may provide the advantageous technical effect of reducing a potential waiting time for carriers 120 located at the check-out station 160 of the linear transport system 110 of the closed-loop transportation system 100 as belt 140 may thus provide more opportunities for attaching a carrier 120 thereto which may thus reduce the potential waiting time for handing over a carrier 120 from the linear transport system 110 to the belt system 130.

The speed of belt 140 may further adaptively be controlled by aspects of the present invention, in which at least one neural network (such as the neural network 400 as further described below) may be used to determine at least one operation parameter for the belt system 130 (from which, e.g., the speed of the belt 140 may be derived). Since the at least one neural network 400 may take, e.g., a current occupation of the linear transport system 110 into account (e.g., besides other parameters outlined above), the at least one operation parameter for the belt system 130 may be selected such that no collisions occur between carriers 120 (neither in the linear transport system 110 nor on the belt 130 and/or when handing over a carrier 120 from the linear transport system 110 to the belt system 130 or vice versa).

As a result, the waiting time for a carrier 120 at the check-out station 160 may be minimized, the risk for bottlenecks in the closed-loop transportation system 100B may be reduced and an increase in throughput may advantageously be supported.

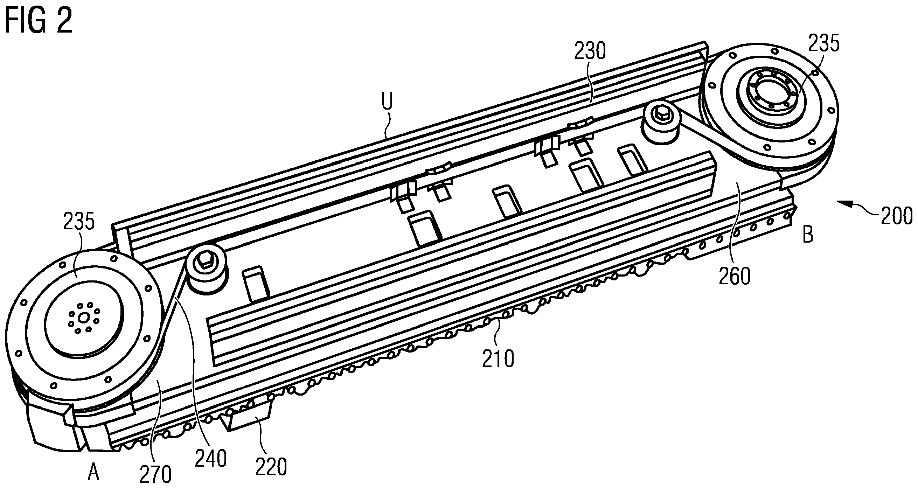

Fig. 2 depicts an illustration of a closed-loop transportation system 200 according to aspects of the present invention.

Closed-loop transportation system 200 may correspond to closed-loop transportation system 100B as outlined above with reference to Fig. 1B. In some cases, the closed-loop transportation system 100B, 200 may be provided as an ovalmover. Components 210, 220, 230, 235, 240, 260, 270, A and B of the closed-loop transportation system 200 according to Fig. 2 may correspond to the respective components 110, 120, 130, 135, 140, 160, 170, A and B of the closed-loop transportation system 100B described with reference to Fig. 1B, above.

A carrier 220 handed over from the linear transport system 210 to the belt system 230 at the check-out station B may be returned to the check-in station 270 by means of the belt 240 along and parallel to edge U of the closed-loop transportation system 200.

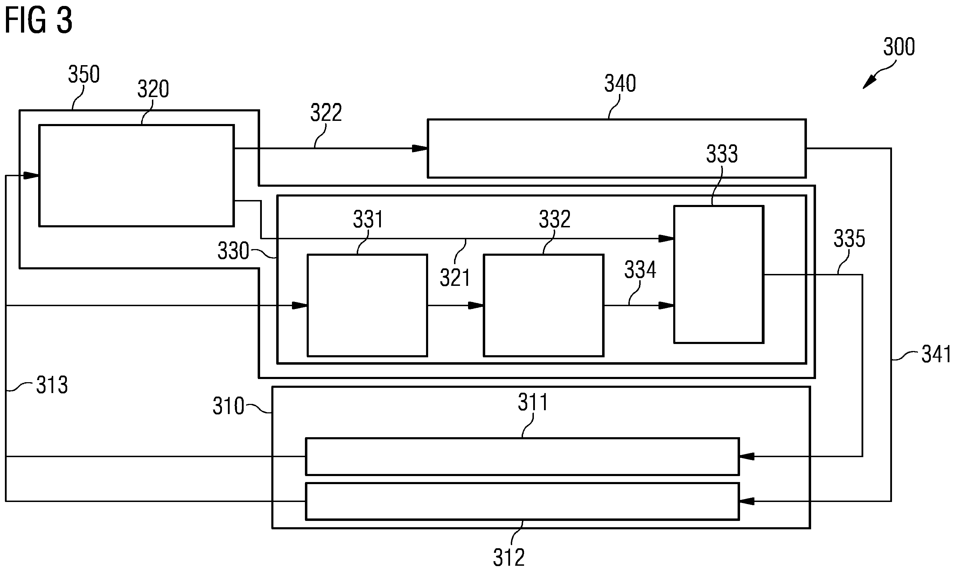

Fig. 3 shows a schematic block diagram of an embodiment of a system 300 of a computer-implemented device 350 for controlling a closed-loop transportation system and the closed-loop transportation system 310.

The system 300 comprises a closed-loop transportation system 310 which may be implemented according to aspects of the present invention. The closed-loop transportation system 310 may, e.g., be implemented as the closed-loop transportation system 100B or 200 as outlined with respect to Figs. 1B or Fig. 2, above.

The closed-loop transportation system 310 may comprise a belt system 311 and a linear transport system 312 which may be configured as outlined above.

The belt system 311 and/or the linear transport system 312 may output a number N of status signals 313 that may be associated with a current system state of the belt system 311 and/or the linear transport system 312 and which may be implemented as described above.

The system 300 may further comprise a sync manager 320.

The sync manager 320 may receive each of the number N of status signals 313 from the belt system 311 and/or the linear transport system 312.

Based at least in part thereon, the sync manager 320 may be configured to monitor a current state of the closed-loop transportation system 310, to set a certain operation state of the belt system 311 and to ensure a smooth synchronization between the belt system 311 and the linear transport system 312 such that a collision free and efficient passing of a carrier (e.g., of a carrier 120) on the linear transport system 312 to the belt system 311 may be ensured (and vice versa). That is, the sync manager 320 may monitor information associated with sync points (e.g., a sync point 155) on a belt of the belt system 311 and a current speed of the belt of the belt system 311. This may ensure that a speed of the belt of the belt system 311 does not exceed design limitations of the belt and/or a speed that may be harmful for the closed-loop transportation system 310. Moreover, the sync manager 320 may determine an operation mode for the belt system 311 (e.g., *"normal operation", "synchronization", "initialization",* etc.) as it will be described in further detail below.

*"Normal operation"* may be understood as the operation mode of the closed-loop transportation system 310 during which production steps may be performed on the goods transported by the carriers of the closed-loop transportation system 310.

*"Synchronization"* may be understood as the operation mode of the closed-loop transportation system 310 during which a handover of a carrier 120 from the linear transport system 312 to the belt system 311 is executed (or vice) versa.

*"Initialization"* may refer to events such as starting or resetting the closed-loop transportation system 310. During that process, each carrier 120 needs to pass a check-in station (e.g., check-in station 170 arranged at the very beginning of the linear transport system 312) and/or a check-out station (e.g., check-out station 160) so that a position of each of the carriers (e.g., one of the carriers 120, 180, 190) can be determined, e.g., upon startup of the closed-loop transportation system 310. This initialization process may advantageously be supported if the belt of the belt system 311 is operated at a constant speed as biasing effects that may result from an operation of the belt system 311 at a variable speed may be avoided.

Moreover, the sync manager 320 may trigger the check-out stations (such as, e.g., check-out station 170 as described with reference to Fig. 1B, above) and/or the check-in stations (such as, e.g., check-out station 160 as described with reference to Fig. 1B, above). In this context, a triggering is to be understood as an activation of the respective check-in/check-out stations to monitor whether sync points (e.g., sync points 155) of the belt of the belt system 311 are passing within close vicinity to the check-in/check-out stations (160/170) and to track respective carriers that are passing a check-in and/or check-out station.

Based thereon, the sync manager 320 may output a signal 321 that may be indicative for a fixed speed setpoint for the belt system 311 and/or an operational state of the belt system 311.

Moreover, the sync manager 320 may output a signal 322 that may be indicative for triggering the aforementioned sync stations and a sync speed at which both a carrier that is to be handed over from the linear transport system 312 to the belt system 311 and the speed of the belt of the belt system 311 need to match to ensure a safe and reliable handover (or vice versa if a carrier is to be handed over from the belt of the belt system 311 to the linear transport system 312).

System 300 may further comprise a belt system control 330.

The belt system control 330 may comprise a receiving unit 331 which may enable a receiving of the number N of status signals 313 from the closed-loop transportation system 310.

The belt system control 330 may comprise a calculating unit 332 (e.g., implemented as the calculating unit described above) which may comprise at least one neural network 400 which will be described in further detail below. Calculating unit 332 may, e.g., be implemented as a programmable logic controller (PLC). Calculating unit 332 may receive the number N of status signals 313 from the receiving unit 331. In other words, the receiving unit 331 is configured to pass the number N of status signals 313 from the receiving unit 331 to the calculating unit 332.

Based on the number N of status signals 313, the calculating unit 332 may determine at least one output signal 334.

The belt system control 330 may further comprise a speed selector 333. Speed selector 333 may receive the at least one output signal 334 from the calculating unit 332. The at least one output signal 334 may be associated with a dynamic setpoint for the speed of the belt system 311, i.e., a speed setpoint for the belt of the belt system 311 that may support an optimized throughput of the closed-loop transportation system 310 during normal operation.

The controlling unit 333 may further receive the signal 321 from the sync manager 320 that may be indicative for a fixed speed setpoint for the belt system 311 and/or an operational state of the belt system 311.

Based on the at least one output signal 334 and/or the signal 321, the controlling unit 333 may determine a speed setpoint 335 which may be forwarded to the belt system 311. If signal 321 indicates that the current state of the belt system 311 shall be, e.g., *"normal operation",* the controlling unit 333 may determine speed setpoint 335 such that it may correspond to the at least one output signal 334 provided by the calculating unit 332 and may thus correspond to a dynamic setpoint for the speed of the belt system 311 such that a throughput of the closed-loop transportation system 310 may be optimized. However, if the current state of the belt system 311 shall be *"synchronization",* the speed selector 333 may override (i.e., disregard) the at least one output signal 334 provided by the calculating unit 332. Instead, the speed selector 333 may determine speed setpoint 335 such that it is in accordance with the fixed speed setpoint provided by sync manager 320 by means of signal 321. The belt of the belt system 311 may then be operated at a constant speed which may support the integrity of the closed-loop transportation system 310. Alternatively, if the operational state, indicated by signal 321, is *"initialization",* the controlling unit 333 may also override that the information provided by means of the at least one output 334 of the calculating unit 332 and may instead determine the speed setpoint 335 in accordance with a constant speed setpoint obtained from the sync manager 320 by means of signal 321.

The belt system 311 may then adjust the speed of its belt (e.g., a toothed belt) accordingly.

Based on the adjusted speed of the belt system 311, an updated number N of status signals 313 may be output and, *inter alia,* received again by the receiving unit 331 of the belt system control 330.

The system 300 may further comprise a linear transport system control 340.

The linear transport system control 340 may be configured to receive the signal 322 indicative of a trigger for triggering the aforementioned sync stations and a sync speed between a carrier on the linear transport system 312 and the belt of the belt system 311.

Based at least in part thereon, the linear transport system control 340 may determine at least one control signal 341 that may indicate a speed of at least one carrier (e.g., the carrier that is to be handed over) of the linear transport system 312. In some examples, the linear transport system Control 340 may also plan potential waiting times of carriers on the linear transport system 312 to allow the execution of respective production steps of the goods transported thereon.

The control signal 341 may be passed to the linear transport system 312 of the closed-loop transportation system 310 which may then, e.g., adjust the speed of respective carriers of the linear transport system 312 accordingly. As a result, the linear transport system 312 may output at least one state signal 313 for a subsequent iteration step of controlling the closed-loop transportation system 310.

The aforementioned neutral network-based determination (e.g., by means of the calculating unit 332 and the neural network 400 implemented therein) of a parameter indicative of an operation speed of the belt system 311 may rule out the requirement, that a carrier 120 can only be attached to the belt of the belt system 311 at (predefined) sync points (e.g., sync points 155) that are potentially arranged at fixed separations relative to each other. This may generally increase the throughput and control flexibility of the closed-loop transportation system 310 and may reduce the risk for blocking states (e.g., states at which a carrier cannot be handed over from the belt of the belt system 311 to the linear transport system 312 as the linear transport system 312 may, e.g., be fully stocked).

Furthermore, by means of the neural network-based adjustment of the speed of the belt of the belt system 311, a throughput of the closed-loop transportation system 310 may be optimized.

Moreover, the combination of the aforementioned two aspects may further allow an operator of the closed-loop transportation system 310 to re-distribute carriers (such as, e.g., carriers 120) during operation (e.g., dynamically change the number of carriers in the closed-loop transportation system 310 and/or waiting times of the carriers 120 on the linear transport system 312 at certain positions to allow the execution of processing steps of the goods transported thereon, etc.). Since the neural network 400 may preferably be based on a reinforcement learning based training methodology, this self-learning algorithm may by itself determine a respective control policy to optimize a set of performance parameters (e.g., throughput, energy consumption, etc.) associated with the closed-loop transportation system 310. This may advantageously reduce the training effort of the neural network (e.g., of the neural network 400) if new use cases (e.g., applying a new number of carriers 120 in the closed-loop transportation system 310 that is different from the previously used number of carriers 120 therein).

Moreover, the aforementioned aspects may support the presence of improved back-up strategies in case a fault and/or an erroneous behavior occurs during operation of the closed-loop transportation system 310. For example, if a carrier 120 needs to be removed from the linear transport system 312 during operation of the closed-loop transportation system 310 due to any given event, customers and/or operators of the closed-loop transportation system 310 may be provided with a backup policy for operating the closed-loop transportation system 310 as the neural network-based (400) calculating unit 332 may be able to determine the at least one output signal 334 such that the potential performance drops and changed optimized operation parameters of the closed-loop transportation system 310 may be mitigated. Therefore, associated maintenance efforts and down-times of the closed-loop transportation system 310 may drastically be reduced.

Moreover, the aforementioned neural network-based control (e.g., based on neural network 400) of the transportation system 310 may not only be used to optimize a currently existing transportation system but may also be applied in the field of design optimizations of closed-loop transportation systems 310. For example, of the number of carriers (120) in the closed-loop transportation system 310 is to be optimized by identifying a most economic trade-off between investment costs and throughput, various closed-loop transportation system designs may be implemented (e.g., each having a different number of carriers) and allowing the calculating unit 332 to determine an optimized at least one output 334 which may be used to operate the closed-loop transportation system 310. Based on the determined at least one output 334, the maximum throughput for the respective design (in particular for the selected number of carriers) may be determined and used for optimizing the design of the closed-loop transportation system 310.

The sync manager 320 and the belt system control 330 may form a computer-implemented device 350 for controlling the closed-loop transportation system 310 according to an aspect of the present invention.

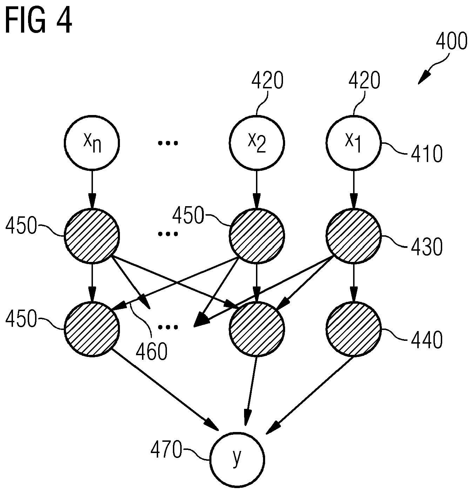

Fig. 4 shows an exemplary neural network 400 as it may be used according to aspects of the present invention.

In a preferred embodiment, the neural network 400 may represent a multi-layer perceptron model that may comprise two hidden layers each comprising 64 neurons. However, it is emphasized that the at least one neural network 400 according to aspects of the present invention is not limited thereto and that other configurations (e.g., comprising a single hidden layer or more than two hidden layers) are possible.

Neural network 400 may comprise an input layer 410 that comprises a number N (with N ≥ 1) of neurons 420. Neurons 420 may represent input values (x₁, x₂, ..., xₙ) that are handed over to the neural network 400. Said input values may, e.g., be a number N (with N ≥ 1) of status signals of a closed-loop transportation system (e.g., the closed-loop transportation system 100B or 310). The number N of status signals may include a certain indication for a current operation status of the closed-loop transportation system 100B as described above.

The neural network 400 may further comprise a number M (with M ≥ 1) of hidden layers 430, 440 (e.g., two hidden layers 430, 440 as exemplarily depicted in Fig. 4).

Each of the hidden layers 430, 440 may comprise a number P (with P ≥ 1) of neurons 450. In a preferred embodiment, the number P of neurons 450 may be equal to the number N of neurons 420. Alternatively, the number of neurons 450 per hidden layer 430, 440 may decrease with increasing depth of the neural network 400. That is, the number P of neurons 450 of hidden layer 430 may be larger than a number Q (with Q ≥ 1) of neurons 450 of the subsequently arranged hidden layer 440 that is associated with a higher depth of the neural network 400 as compared to hidden layer 430.

Neurons 450 of two subsequently arranged hidden layers 430, 440 may be interconnected to each other. That is, a neuron 450 of the first hidden layer 430 may be interconnected to at least one neuron 450 of the subsequently arranged second hidden layer 440. In some examples, a neuron 450 of the first hidden layer 430 may be interconnected to each of the neurons 450 of the second hidden layer 440.

Each of the aforementioned interconnections may be associated with a weight 460. In some exemplary embodiments, the output of each of the neurons 450 of the first hidden layer 430 may be weighted by a weight 460 and may be passed to a respective neuron 450 of the second hidden layer 440. Respective weights 460 may be determined by training the neural network 400 as described herein.

In some embodiments, the neurons 450 of the hidden layer which are associated with the highest depth of the neural network 400 (e.g., hidden layer 440) may be passed to an output layer 470.

Output layer 470 may, e.g., comprise at least one neuron (e.g., a single node) such that the output of hidden layer 440 may be converged to at least one node. The at least one node of output layer 470 may be associated with at least one output signal of the neural network 400.

In a preferred embodiment, each hidden layer 430, 440 and/or the output layer 470 may be provided with an activation function. The activation function may preferably be a hyperbolic tangent as it is centered in zero and may minimize the effect of large values in the gradient during training.

The training of the neural network 400 may be based at least in part on a reinforcement learning algorithm. The reinforcement learning may use rewards and penalties to optimize the functionality of the computer-implemented device when controlling the closed-loop transportation system (e.g., the closed-loop transportation system 100B).

Further, for reinforcement learning, the neural network 400 may receive penalties for actions that violate any predefined boundaries.

In some embodiments, the neural network 400 may be trained using a Proximal Policy Optimization (PPO) algorithm. In the PPO algorithm, a first neural network and a second neural network may be trained, wherein the first neural network is configured to provide actions fed into the closed-loop transportation system and the second neural network is trained to estimate quality of these actions, in other words how good these actions are.

In particular, the PPO algorithm may be run on a simulation of the closed-loop transportation system 100B. Thus, the PPO algorithm is not run on the closed-loop transportation system directly, but instead on a simulation of said closed-loop transportation system. This is beneficial as reinforcement learning algorithms start off with random actions that can cause damages or problems in the closed-loop transportation system. By using a simulation, the simulation can simply be reset after a series of destructive actions and a negative reward is returned to the algorithm so that the algorithm can learn from the mistakes.

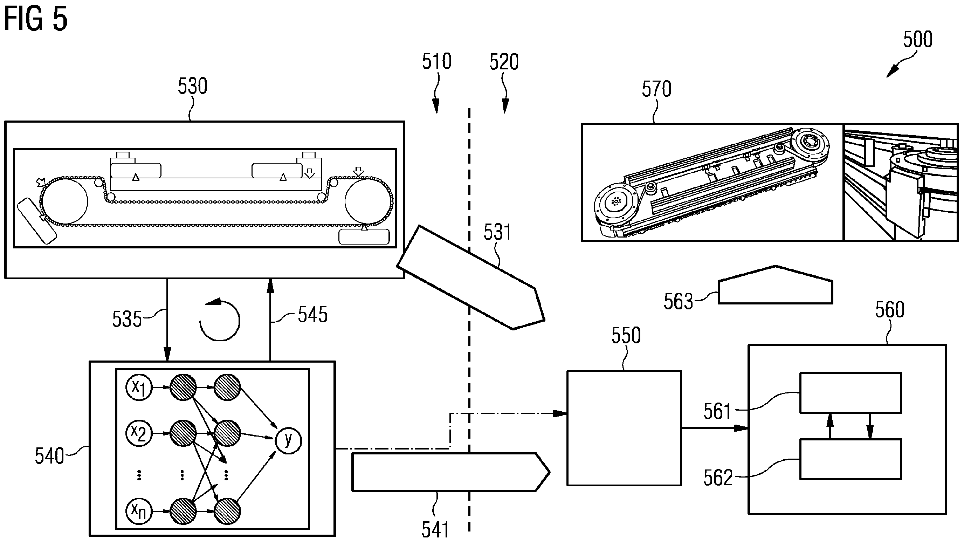

Fig. 5 shows a schematic block diagram of a training architecture 500 of a training of a neural network 400 500 for training the at least one neural network (e.g., the neural network 400 which may be comprised in calculating unit 331) according to aspects of the present invention.

In a preferred embodiment, the training may be performed in a two-step process, wherein a first training step may be performed in a virtual world 510 whereas a subsequent second training step may be performed in a real world 520.

The training may be initiated in the virtual world 510 based on a simulation model 530 of a closed-loop transportation system (e.g., the closed-loop transportation system 100B or 310). A simulation-based training may ensure standard conditions without external disturbances and in a controlled environment. A model-based training may avoid an undue blockage of a real machine (due to the time requirements for performing the training) and it may avoid the risk of damaging the closed-loop transportation system in situations in which the trained neural network is not yet in a position in which reliable predictions regarding the at least one operation parameter can be made (as discussed above).

It is noted that calculations run on a programmable logic controller (PLC) are not sufficient for running a reinforcement algorithm while simultaneously ensuring a safe operation of the closed-loop transportation system within defined limits (e.g., a defined cycle time for a carrier).

That is, the simulation model 530 may output a number N of status signals 535 that may characterize a current operation state of a closed-loop transportation system 100B. These status signals 535 may be supplied to a neural network 540 (e.g., the neural network 400 as described with reference to Fig. 4, above) which may provide at least one output signal 545 (e.g., a speed setpoint for the speed of the belt of belt system of the closed-loop transportation system) based on the number N of status signals 535. The simulation mode 530 may be updated according to the at least one output signal 545 and may output a number N of new status signals 535 that is passed to the neural network 540.

The number N of status signals 535 may be associated with an improvement (e.g., associated with an increase of the throughput of the closed-loop transportation system) or a deterioration (e.g., associated with a decrease of the throughput of the closed-loop transportation system (100B, 310) of the operation state of the closed-loop transportation system (100B, 310). That information may be used by the neural network 540, which is preferably based on a reinforcement learning-based architecture, to increase a total reward value associated with the previously output at least one output signal 545 if the at least one output signal 545 has led to an improved throughput of the closed-loop transportation system (100B, 310). However, the total reward value may be decreased (e.g., by means of a penalty) if the previously output at least one output signal 545 is associated with a decrease of the throughput of the closed-loop transportation system. It may be seen as a goal of the neural network 540 (and the underlying training model) to optimize the total reward.

The aforementioned optimization of the closed-loop transportation system (100B, 310) may iteratively be repeated until no further significant improvement of the total reward is achieved anymore.

If the training of the neural network 540 is considered to have successfully been completed, it may be deployed in the real world 520.

That is, the simulation model 530 may be used at least in part for a virtual commissioning 531 of the closed-loop transportation system 100B, 310 that may later be implemented as a real world closed-loop transportation system 570.

What is more, the trained neural network 540 may be imported 541 into a development unit 550 of the real world 520. Development unit 550 may provide a development environment for an automation of the closed-loop transportation system 570. Moreover, development unit 550 may provide means for writing/composing, building and testing of respective code.

The development unit 550 may further be configured to pass the respective code onwards to a centralized control unit 560, which may comprise control means for the linear transport system 561 and/or control means for the belt system 562. In some examples, the control means 561 and 562 may be in communication with each other.

From the centralized control means 560, the trained neural network 540 may be deployed onto one or more real world closed-loop transportation systems 570. In this case, the centralized control unit 560 may be understood as a cloud-based infrastructure which may provide the real world closed-loop transportation system 570 with a trained neural network 540.

The centralized control means 560 may deploy the trained neural network 540 by deployment means 563. The deployments means 563 may be provided as a local network, an internet connection and/or any other suitable means for efficiently supplying the trained neural network 540 to a real world closed-loop transportation system 570.

However, in some cases, the training of the neural network 540 may be continued in the real world 520. In some embodiments, a number N of status signals of the real world closed-loop transportation system 570 may be logged and, e.g., forwarded to a cloud infrastructure (e.g., together with a corresponding at least one output signal) preferably together with the at least one output signal provided by the trained neural network.

Said data tuples may further be used to train the neural network in the real world 520, for the sake of fine tuning the neural network 400 trained in the virtual world 510 and/or for adapting the neural network to circumstantial changes of the closed-loop transportation system which may, e.g., arise from friction changes and or attrition which may not have been considered in sufficient depth by the simulation model 530. Said follow-up training of the neural network 540 in the real world 520 may either be performed on the closed-loop transportation system 570 and/or may be executed on a (remote) cloud infrastructure. In the latter case, one or more real world closed-loop transportation systems may be provided with an updated trained neural network (if precautionary safety checks have been successfully performed and if the updated neural network performs within specified limits).

However, it is noted that the training of the neural network may also be limited to a training based on a simulation, i.e., a virtual world model only.

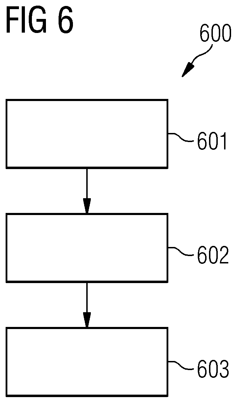

Fig. 6 shows an exemplary flowchart of a computer-implemented method 600 for controlling a closed-loop transportation system 100B, 310, 570. Examples of such a closed-loop transportation system 100B, 310, 570 are discussed with reference to Figs. 1B and 3.

The computer-implemented method 600 of Fig. 6 includes method steps 601-603:
In step 601, a number N of status signals with N ≥ 1 including an indication of a current operation status of the closed-loop transportation system 100B, 310, 570 is received.
In step 602, a calculating, using at least one neural network 400, of at least one output signal 334 for controlling the belt system 130, 311 using the received at least one signal 334 as input is performed.
In step 603, the belt system 130, 311 may be controlled using the provided at least one output signal 334.

Although the present invention has been described in accordance with preferred embodiments, it is obvious for the person skilled in the art that modifications are possible in all embodiments.

### List of Reference

- A: first end
- B: second end
- U: upper side
- 100A: closed-loop transportation system
- 100B: closed-loop transportation system
- 110: linear transport system
- 120: carrier
- 130: belt system
- 135: roller
- 140: belt
- 150: sync points
- 155: sync points of toothed belt
- 160: check-out station
- 165: sync trigger
- 170: check-in station
- 180: carrier
- 190: carrier
- 200: closed-loop transportation system
- 210: linear transport system
- 220: carrier
- 230: belt system
- 235: roller
- 240: belt
- 260: check-out station
- 270: check-in station
- 300: system
- 310: closed-loop transportation system
- 311: belt system
- 312: linear transport system
- 313: number N of status signals
- 320: sync manager
- 321: signal indicative for a fixed speed setpoint for the belt system and/or an operational state of the belt system
- 322: signal indicative for triggering sync stations
- 330: belt system control
- 331: receiving unit
- 332: calculating unit
- 333: controlling unit
- 334: at least one output signal
- 335: speed setpoint
- 340: linear transport system control
- 341: control signal
- 350: computer-implemented device
- 400: neural network
- 410: input Layer
- 420: neuron
- 430: hidden layer
- 440: hidden layer
- 450: neuron/node
- 460: weight
- 470: output layer
- 500: training architecture
- 510: virtual world
- 520: real world
- 530: simulation model
- 531: virtual commissioning
- 535: status signal
- 540: neural network
- 545: output signal
- 541: import
- 550: development unit
- 560: centralized control unit
- 561: linear transport system
- 562: belt system
- 563: deployment means
- 570: closed-loop transportation system
- 600: computer-implemented method
- 601-603: method steps

## Claims

1. A computer-implemented device (350) for controlling a closed-loop transportation system (100B, 310, 570), the closed-loop transportation system (100B, 310, 570) comprising:
a linear transport system, (110, 312) including a first end (A) and a second end (B);
a belt system (130, 311) arranged to form a closed-loop between the first end (A) and the second end (B) of the linear transport system (110, 312);
the computer-implemented device (350) comprising:
a receiving unit (331) for receiving a number N of status signals, with N ≥ 1, the number N of status signals including a certain indication for a current operation status of the closed-loop transportation system (100B, 310, 570);
a calculating unit (332) using at least one neural network (400), said at least one neural network (400) being configured to provide at least one output signal (334) for controlling the belt system (130, 311) using the number N of status signals (313) as input; and
a controlling unit (333) for controlling the belt system (130, 311) using the provided at least one output signal (334).

2. The device (350) of claim 1,
wherein the linear transport system (110, 312) further comprises a number of carriers (120) movable between the first end (A) and the second end (B) of the linear transport system (110, 312); and
wherein the belt system (311) is further configured to receive at least one carrier (120) from the linear transport system (110, 312) at the second end (B) and to return the at least one carrier (120) to the linear transport system (110, 312) at the first end (A).

3. The device (350) of claim 2,
wherein the receiving unit (331) is configured to receive the number N of status signals including:
- a position of the number of carriers (120) in the linear transport system (110, 312);
- an occupancy of an initial segment of the linear transport system (110, 312);
- an occupancy of a final segment of the linear transport system (110, 312);
- an activation information of the initial segment of the linear transport system (110, 312);
- an activation information of the final segment of the linear transport system (110, 312);
- an operation mode of the belt system (130, 311); and/or
- an operation speed of the belt system (130, 311) during a previous cycle.

4. The device (350) of one of claims 1 to 3,
wherein the at least one output signal (334) provided by the neural network (400) includes a parameter indicative of an operation speed of the belt system (130, 311).

5. The device (350) of one of claims 2 to 4,
wherein the controlling unit (333) is configured to disregard the provided at least one output signal (334) when one or more predefined conditions are met.

6. The device (350) of claim 5,
wherein the one or more predefined conditions are met when a carrier (120) is received by the belt system (130, 311) at the second end (B) and/or when a carrier (120) is returned from the belt system (130, 311) to the linear transport system (110, 312) at the first end (A) and/or during an initialization stage of the closed-loop transportation system (100B, 310, 570).

7. The device (350) of one of claims 2 to 6,
wherein the neural network (400) is configured to use reinforcement learning and to receive as additional inputs rewards for maximizing a throughput of the at least one carrier (120) in the closed-loop transportation system (100B, 310, 570), rewards for minimizing an energy consumption of the belt system (130, 311), rewards for avoiding a blocking state of the at least one carrier (120) if more than one carrier (120) is present and/or rewards for allowing a simultaneous receiving of a carrier (120) at the second end (B) by the belt system (130, 311) and a returning of another carrier (120) at the first end (A) and rewards for avoiding a collision of carriers (120) if more than one carrier (120) is present.

8. The device (350) of one of the claims 1 to 7,
wherein the at least one neural network (400) is trained using a Proximal Policy Optimization, PPO, algorithm.

9. The device (350) of claim 8,
wherein the PPO algorithm is run on a simulation (530) of the closed-loop transportation system (100B, 310, 570).

10. The device (350) of one of the claims 1 to 9,
wherein the at least one neural network (400) is at least partially trained based on inputs associated with a real-world closed-loop transportation system (100B, 310, 570).

11. The device (350) of claims 9 and 10,
wherein the training of the at least one neural network (400) based on the real-world closed-loop transportation system (100B, 310, 570) is configured to remove deviations between the simulation of the closed-loop transportation system (100B, 310, 570) and the real-world closed-loop transportation system (100B, 310, 570) and/or to account for degradation effects in the closed-loop transportation system (100B, 310, 570).

12. The device (350) of claim 11,
wherein the inputs associated with the real-world closed-loop transportation system (100B, 310, 570) are obtained from a cloud service and/or wherein the at least one trained neural network (540) is obtained from a cloud service.

13. A system (300) comprising:
a closed-loop transportation system (100B, 310, 570) comprising:
a linear transport system, (110, 312) with a first end (A) and a second end (B);
a belt system (130, 311) arranged to form a closed-loop between the first end (A) and the second end (B) of the linear transport system (110, 312); and
a computer-implemented device (350) for controlling the belt system (130, 311) according to one of claims 1 to 12.

14. A computer-implemented method (600) for controlling a closed-loop transportation system (100B, 310, 570), the closed-loop transportation system (100B, 310, 570) comprising:
a linear transport system, (110, 312) with a first end (A) and a second end (B);
a belt system (130, 311) arranged to form a closed-loop between the first end (A) and the second end (B) of the linear transport system (110, 312);
the computer-implemented method (600) comprising:
receiving (601) a number N of status signals with N ≥ 1 including an indication of a current operation status of the closed-loop transportation system (100B, 310, 570);
calculating (602), using at least one neural network (400), at least one output signal (334) for controlling the belt system (130, 311) using the received at least one signal (334) as input; and
controlling (603) the belt system (130, 311) using the provided at least one output signal (334).

15. A computer program product comprising a program code for executing the computer-implemented method (600) according to claim 14 when run on at least one computer.
